# EUROPÄISCHE PATENTSCHRIFT

(11) **EP 0 790 429 B1**
(45) Veröffentlichungstag und Bekanntmachung des Hinweises auf die Patenterteilung: **03.05.2000**
(21) Anmeldenummer: 97101956.7
(22) Anmeldetag: 07.02.1997
(51) Int. Cl.: F16D 59/02

(54) **Federkraftbremse mit Elektromagnetlüftung**
Spring-applied brake with electromagnetic release
Frein à ressort à desserage électromagnétique

(30) Priorität: 13.02.1996 DE 19605234
(43) Veröffentlichungstag der Anmeldung: 20.08.1997
(73) Patentinhaber: Lenze GmbH & Co. KG Aerzen, D-31855 Aerzen (DE)
(72) Erfinder: Brendler, Matthias, Dr.-Ing., 31785 Hameln (DE); Habenicht, Horst, 32699 Extertal (DE)
(74) Vertreter: Elbertzhagen, Otto, Dipl.-Ing.

(56) Entgegenhaltungen:
- EP-A- 0 735 292
- DE-A- 2 820 204

## Beschreibung

Die Erfindung bezieht sich auf eine elektromagnetisch lüftbare Federkraftbremse der im Gattungsbegriff des Patentanspruchs 1 näher bezeichneten Art.

Eine solche Federkraftbremse ist aus der DE 28 20 204 A1 bekannt, und es soll bei ihr erreicht werden, das Bremsmoment entsprechend der abzubremsenden Last variabel steuerbar zu machen. Denn elektromagnetisch lüftbare Federkraftbremsen der in Rede stehenden Art werden vornehmlich in Antrieben für Lastförderfahrzeuge, wie Hubstapler eingesetzt, und hier ist je nach dem Beladungszustand des Fahrzeugs, insbesondere bei Leerfahrt oder geringer Last, der jeweils volle Bremseinsatz unzweckmäßig. Bei bloßer Abschaltung des Erregerstroms für den Lüftungsmagneten steht jedoch ausschließlich das von der Kraft der mechanischen Druckfedern abhängige, volle Bremsmoment zur Verfügung. Zwar kann für Notsituationen eine dementsprechende Vollbremsung vorgesehen werden, bei normalen Betriebsbedingungen variiert man jedoch das Bremsmoment entsprechend der abzubremsenden Last oder gemäß den gewünschten Einsatzbedingungen, indem man bei der bekannten Federkraftbremse den Haltestrom zunächst abschaltet und kurzzeitig danach auf die Erregerspule des Lüftungsmagneten eine auf einen Teil der Betriebsspannung reduzierte Spannung aufschaltet. Hierdurch ergibt sich ein Erregerstrom, der gegenüber dem Übererreger- oder Lösestrom vermindert ist, womit die Magnetkraft des Magnetteils die mechanische Kraft der Federn lediglich teilweise kompensiert, also eine resultierende Bremskraft zur Verfügung steht, die gegenüber der vollen Bremskraft verringert ist.

Bei der bekannten Federkraftbremse besteht eine Schwierigkeit darin, den jeweils gegenüber dem Übererreger- oder Lösestrom verminderten Erregerstrom für den sanften Bremseinsatz zu bestimmen. Denn die Bedingungen für die Größe des jeweils gewünschten Teilbremsmomentes ändern sich aufgrund verschiedener Einflußfaktoren, wozu Verschleiß oder Abfall der Speisegleichspannung der üblicherweise über Akkus betriebenen Förderfahrzeuge gehören. So muß ein erheblicher Aufwand getrieben werden, um den für den gewünschten teilweisen Bremseinsatz jeweils benötigten Erregerstrom richtig zu bestimmen. Insbesondere genügt es bei der bekannten Federkraftbremse nicht, den Haltestrom kurzzeitig abzuschalten und danach wieder aufzuschalten, es muß vielmehr ein Erregerstrom vorgesehen werden, der höher als der Haltestrom ist.

Der Erfindung liegt nun die Aufgabe zugrunde, eine Federkraftbremse der gattungsgemäßen Art zu schaffen, bei der zumindest ein sanfter Bremseinsatz oder ein Teilbremsmoment ausgehend von dem Haltestrom ohne großen schaltungstechnischen Aufwand erzielt werden kann.

Die Erfindung beruht auf der Erkenntnis, daß die auf die Ankerscheibe der Federkraftbremse wirkende Magnetkraft von der Lüftwegweite und vom Erregerstrom jeweils abhängig ist. Je größer der Lüftweg ist, umso geringer wird die Magnetkraft, die im wesentlichen mit der Lüftwegweite parabolisch abnimmt. Entsprechend flacht die Magnetkraftkennlinie bei zunehmendem Lüftweg ab. Für unterschiedliche Erregerströme ergibt sich eine Kurvenschar der Funktion der Magnetkraft, die über dem Lüftweg aufgetragen wird. In analoger Darstellung ergibt die Kraftkennlinie der mechanischen Federn, die auf die Ankerscheibe einwirken, eine über den Lüftweg hinweg leicht abfallende Gerade, an deren Verlauf sich die Magnetkraftkennlinien in ihrem flacher verlaufenden Bereich annähern. Die Höhe des Bremsmomentes ist von der resultierenden Kraft, gebildet aus Federkraft minus Magnetkraft, abhängig, und um ein geringes Anfangsbremsmoment zu erzielen, ist es notwendig, die resultierende Kraft kleinzuhalten. Für die Einleitung des Bremsvorganges muß sich die Ankerscheibe vom Magnetteil lösen und den Lüftweg bis zum Rotor hin überwinden. Dazu muß der Erregerstrom abgeschaltet oder soweit verringert werden, bis die Magnetkraft kleiner als die mechanische Federkraft wird. Bei den bekannten Federkraftbremsen liegt im Lüftungszustand die Ankerscheibe unmittelbar am Magnetteil an, folglich ändert sich wegen des parabolischen Verlaufs der Magnetkraftkennlinien die auf die Ankerscheibe wirkende Magnetkraft zwischen der Anlage am Magnetteil und nach Überbrückung des Lüftweges der Anlage am Bremsrotor sehr stark. Entsprechend groß ist die resultierende Kraft, mit der die Ankerscheibe den Bremsrotor beaufschlagt, wenn der Erregerstrom nach dem Abfall nicht auf einen Wert eingestellt wird, der erheblich über dem Haltestrom liegt. Anders verhält es sich, wenn für die Ankerscheibe im Haltezustand am Magnetteil ein Luftspalt künstlich vorgegeben wird, der zwar einerseits einen höheren Haltestrom erfordert, andererseits jedoch bei Luftspaltvergrößerungen infolge Überbrückung des Lüftwegs durch die Ankerscheibe bei geringfügig vermindertem Haltestrom eine größere magnetische Rückhaltekraft auf die am Bremsrotor befindliche Ankerscheibe bewirkt, wodurch die auf die Ankerscheibe ausgeübte, resultierende Kraft kleiner ist, was einen sanften Bremseinsatz möglich macht.

Entsprechend erfolgt die Lösung der vorstehend angegebenen Aufgabe durch die kennzeichnenden Merkmale des Patentanspruchs 1.

Für die Erfindung ist wesentlich, daß durch das Einfügen von nicht magnetischem Material zwischen der Ankerscheibe und dem Magnetteil der Arbeitsbereich der Ankerscheibe in den flacheren Bereich des Verlaufs der Magnetkraftkennlinien verschoben wird, womit nach Überwindung des Lüftweges, der sich zu dem durch das nicht magnetische Material bedingten Luftspalt addiert, es nur zu einer geringen Verminderung der auf die Ankerscheibe wirkenden Magnetkraft kommt. In Abstimmung auf den Verlauf der Kennlinie der mechanischen Federn, welche die Ankerscheibe beaufschlagen, kann man somit ausgehend von einem entsprechend festgelegten Haltestrom durch Wiederaufschaltung oder Verringerung dieses Haltestroms eine relativ geringe resultierende Kraft auf die am Bremsrotor sich anlegende Ankerscheibe erzielen, um ein geringes Anfangsbremsmoment zu erreichen.

Es ist zwar grundsätzlich bekannt, bei mit beweglichen Ankern zusammenwirkenden Magnetteilen, wie insbesondere auch bei Federkraftbremsen, zwischen dem Magnetteil und der Ankerscheibe dünne nicht magnetische Werkstoffe, wie Messingbleche einzufügen, um bei Entregung ein Kleben der Ankerscheibe am Magnetteil zu verhindern. Dies hat man bei Federkraftbremsen deshalb vorgesehen, damit bei Entregen des Magnetteils die Ankerscheibe schnell abfällt und in kurzer Zeit das volle Bremsmoment zur Verfügung steht. Gerade das soll bei der erfindungsgemäßen Federkraftbremse aber nicht der Fall sein.

Grundsätzlich muß bei der erfindungsgemäßen Federkraftbremse mit einem gegenüber bekannten Ausführungen höheren Haltestrom und ebenfalls mit einem höheren Übererreger- oder Lösestrom für den Lüftvorgang gearbeitet werden. Darauf läßt sich die Erregerspule des Magnetteils und der gesamte magnetische Kreis ohne weiteres einstellen, der Vorteil mit einfachen Mitteln einen sanften Bremseinsatz möglich zu machen überwiegt jedoch bei weitem.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Schnitt durch eine elektromagnetisch lüftbare Federkraftbremse,
- Fig. 2: eine vergrößerte Darstellung des in Figur 1 eingekreisten Details und
- Fig. 3: ein Diagramm über die Abhängigkeit der Kraftverhältnisse vom Lüftweg bei der Federkraftbremse nach den Figuren 1 und 2.

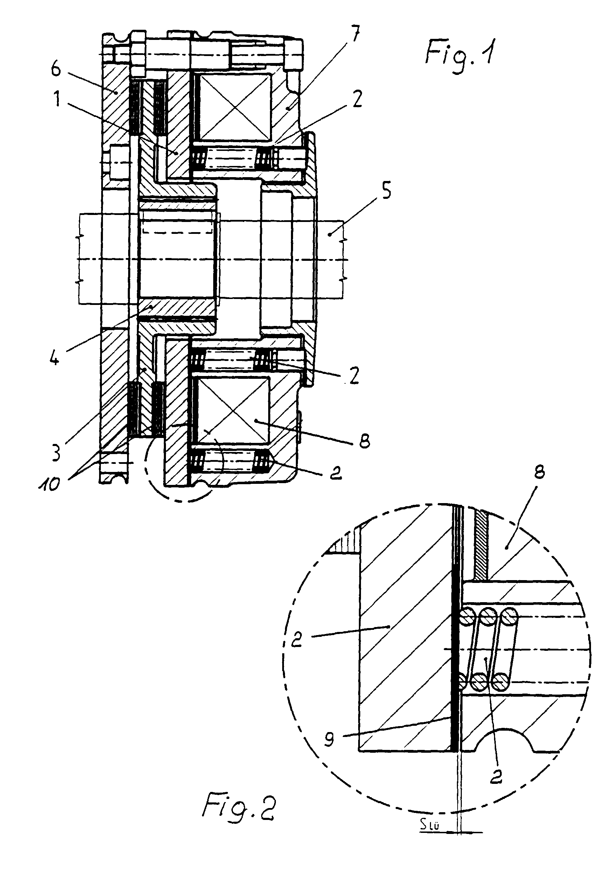

Figur 1 zeigt im einzelnen eine Federkraftbremse, durch die hindurch sich eine abzubremsende Welle 5 erstreckt, auf welcher axial verschieblich jedoch drehfest ein Bremsrotor 3 angeordnet ist. Dazu sitzt auf der Welle 5 drehfest eine Nabe 4, die entlang ihres Umfanges eine achsparallele Verzahnung hat, welche mit einer entsprechenden Innenverzahnung an der zentralen Bohrung des Bremsrotors 3 zusammenwirkt. Der Bremsrotor 3 hat entlang seiner äußeren Ränder an seinen beiden Stirnseiten Reibbeläge 10, um zum einen kraftschlüssig gegen eine Gegendruckscheibe 6 verspannt werden zu können. Dazu ist der Bremsrotor 3 zum anderen an der von der Gegendruckscheibe 6 abgelegenen Seite mittels einer Ankerscheibe 1 beaufschlagbar, welche ebenfalls achsparallel zur Welle 5 verschoben werden kann. Auf der vom Bremsrotor 3 abliegenden Seite greifen an der Ankerscheibe 1 mechanische Druckfedern 2 an, welche über die Ankerscheibe 1 die Verspannung des Bremsrotors 3 gegen die Gegendruckscheibe 6 bewirken und somit die Bremskraft aufbringen. Entsprechend sind die Druckfedern 2 achsparallel zur Ankerscheibe 1 angeordnet.

Die Ankerscheibe 1 ist Teil eines magnetischen Kreises, zu dem ein Magnetteil 7 mit einer Erregerspule 8 gehört. Bei Erregung des Magnetteils 7 wird die Ankerscheibe 1 unter Überwindung der Druckkräfte der mechanischen Federn 2 zum Magnetteil 7 hin angezogen, wobei die Ankerscheibe 1 den in Figur 2 kenntlich gemachten Lüftweg Slü von dem an der Gegendruckscheibe 6 anliegenden Bremsrotor 3 weg zurücklegt und hierdurch den Bremsrotor 3 freigibt. Zu diesem Zweck muß die Erregerspule 8 mit einem Übererreger- oder Lösestrom gespeist werden, der auf einen Haltestrom verringert werden kann, sobald die Ankerscheibe 1 ihre Lüftposition am Magnetteil 7 eingenommen hat.

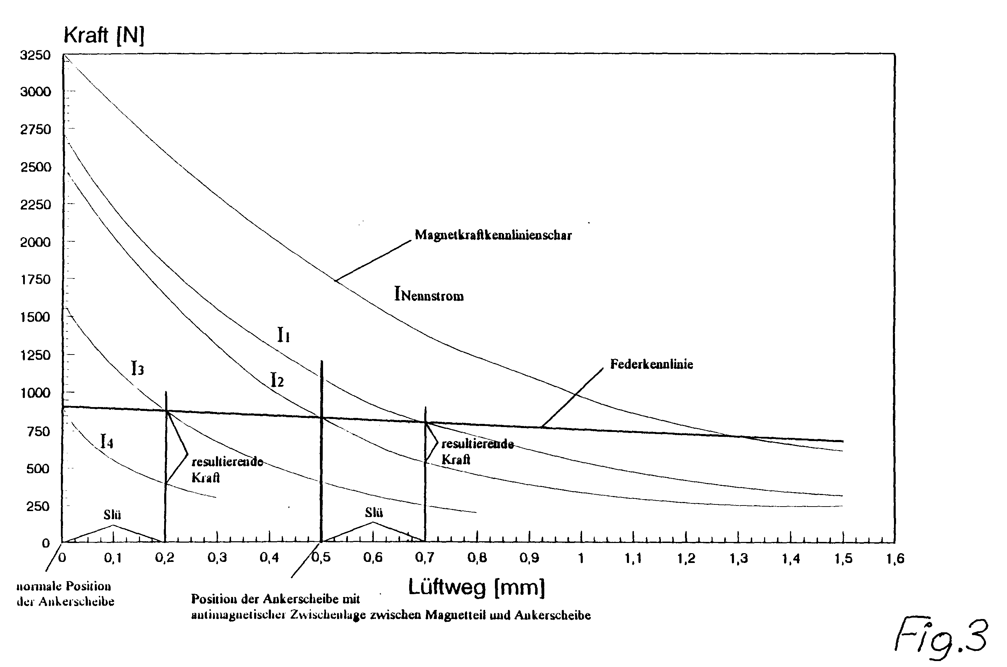

In der Lüftposition liegt die Ankerscheibe 1 nicht unmittelbar am Magnetteil 7 an, vielmehr ist hier ein magnetischer Kurzschluß verhindert, indem die Ankerscheibe 1 an ihrer zum Magnetteil 7 hin liegenden Stirnseite ein nicht magnetisches Distanzelement 9 in Gestalt einer Messingscheibe aufweist, womit magnetisch gesehen in der Lüftposition der Ankerscheibe 1 ein künstlicher Luftspalt zum Magnetteil 7 hin besteht. Aufgrund dieses Luftspaltes ist der Arbeitsbereich der Ankerscheibe 1 in den Bereich des flacheren Verlaufs der Magnetkraftkennlinien verlagert, wodurch sich eine gewisse Annäherung an den Verlauf der Federkennlinien der mechanischen Druckfedern 2 ergibt. Dies ist in dem Diagramm nach Fig. 3 deutlich gemacht.

Bei verschiedenen Erregerströmen I1, I2, I3 ergibt sich eine Magnetkraftkennlinienschar, die aufgetragen über dem Lüftweg einen etwa parabolisch abfallenden Verlauf hat. Folglich nimmt bei zunehmendem Lüftweg die Steigung der Magnetkraftkennlinien ab, sie nähern sich somit der Steigung der Federkennliniefür die mechanischen Druckfedern 2, die sich über den Lüftweg hinweg als leicht abfallende Gerade ergibt. Die Schnittpunkte der einzelnen Magnetkraftkennlinien, die sich nach dem jeweiligen Erregerstrom in Abhängigkeit vom Lüftweg ergeben, mit der Federkennlinie kennzeichnen die jeweiligen Punkte, bei denen sich an der Ankerscheibe 1 zwischen der Magnetkraft und der Kraft der mechanischen Druckfedern 2 bei dem betreffenden Lüftweg ein Kräftegleichgewicht ergibt. Verringert man ausgehend von einem solchen Punkt jeweils den Erregerstrom, womit an der Ankerscheibe 1 die Kräfte der mechanischen Druckfedern 2 das Übergewicht erhalten, dann stellt man fest, daß bei einem Haltestrom I4, wie er in der bisher üblichen Lüftposition der Ankerscheibe 1 bei Luftspaltweite = 0 aufgebracht werden muß, nach dem Zurücklegen des Lüftweges Slü der Ankerscheibe 1 von 0,2 mm und Aufbringen des gleichen Haltestroms der Sprung von der resultierenden Kraft der am Bremsrotor 3 anliegenden Ankerscheibe 1 zum Gleichgewichtszustand hin wesentlich größer ist als unter solchen sonst gleichen Bedingungen bei Erzeugung eines Anfangsluftspaltes von 0,5 mm unter Einfügung des nicht magnetischen Distanzelementes 9 zwischen der Ankerscheibe 1 und dem Magnetteil 7 der Federkraftbremse. Zwar muß hier in der Lüftposition der Ankerscheibe 1, also der im Diagramm bezeichneten Position der Ankerscheibe mit antimagnetischer Zwischenlage zwischen Magnetteil und Ankerscheibe, der höhere Haltestrom I2 auf die Erregerspulte 8 aufgeschaltet werden, nach Zurücklegen des Lüftweges Slü von ebenfalls 0,2 mm ergibt sich dort bei Aufbringen des gleichen Haltestromes bei der am Bremsrotor 3 anliegenden Ankerscheibe 1 eine wesentlich geringere resultierende Kraft beim Übergewicht der mechanischen Federkräfte, weswegen hierdurch mit dem Bremseinsatz bei der Federkraftbremse ein weitaus geringeres Anfangsbremsmoment und somit ein sanfter Bremseinsatz erzielbar ist. In dem Diagramm ergeben sich die darin verglichenen resultierenden Kräfte bei einem Lüftweg von 0,2 mm einerseits und 0,7 mm andererseits.

In der Praxis bedeutet dies weiter, daß man für den sanften Bremseinsatz den Haltestrom nicht abschalten und wieder aufschalten muß, sondern es vielmehr für den Abfall der Ankerscheibe in der Lüftposition vom Magnetteil 7 weg genügt, den Haltestrom nur geringfügig zu verringern, ohne die resultierende Kraft an der Ankerscheibe 1 bei Anlage am Bremsrotor 3 übermäßig größer werden zu lassen. Man erzielt auch dann noch einen angenehm sanften Bremseinsatz, wenn die Dicke des Distanzelementes 9 so bestimmt wird, daß bei einer Verringerung des Haltestroms um 5 bis 10 % die Ankerscheibe 1 vom Magnetteil 7 abfällt. Bei einem ohnehin geregelten Strom, wie er zur Versorgung einer Federkraftbremse der in Rede stehenden Art in der Regel zur Verfügung steht, läßt sich eine solche Verringerung des Haltestromes ohne großen Aufwand verwirklichen.

Der vorbeschriebene Effekt läßt sich noch steigern, indem die Kräfte der mechanischen Druckfedern 2 entlang dem Umfang oder einem Teilkreis der Ankerscheibe ungleichmäßig aufgebracht werden. So kann man die Druckfedern 2 relativ zur Ankerscheibe 1 nicht drehsymmetrisch anordnen, indem beispielsweise bei der üblichen drehsymmetrischen Anordnung von drei Druckfedern eine dieser Bremsfedern weggelassen wird. Man erzielt dadurch eine asymmetrische Kraftbeaufschlagung der Ankerscheibe, die man aber auch bei drehsymmetrisch zur Ankerscheibe angeordneten Druckfedern erzielen kann. Im letzteren Fall gibt man zumindest einer der Druckfedern 2 eine von den anderen Federn abweichende Federcharakteristik, um eine einseitig höhere Federkraft zu bewirken. Man kann dies bei gleichen Druckfedern 2 einfach dadurch bewerkstelligen, daß man bei einer dieser Federn eine Unterlage vorsieht, die Feder also entsprechend höher vorspannt. Letztlich geht es darum, bei einer Verringerung des Haltestroms die Ankerscheibe sich ungleichmäßig von der Anlagefläche am Magnetteil 7 ablösen zu lassen, womit sie sich im Lüftweg etwas schrägstellt. Sie kann sich damit an einer Seite bereits an die Reibpartner des Bremsrotors 3 anlegen und auch hierdurch im anfänglichen Bremseinsatz zu einer Verminderung des Bremsmomentes beitragen. Dieser Effekt läßt sich durch die Verwendung eines Distanzelementes 9, das als kreisringförmiges Segment ausgebildet ist, noch steigern. Letztlich löst sich die Ankerscheibe 1 selbstverständlich voll und ganz vom Magnetteil 7, um vollflächig am Bremsrotor 3 anzulegen, so geht es bei dieser Maßnahme nur darum, noch zusätzlich zu einem sanften Bremseinsatz beizutragen.

Grundsätzlich spielt es keine Rolle, ob die beabsichtigte Luftspaltvergrößerung durch Anordnung des Distanzelementes 9 entweder an der Ankerscheibe 1 selbst oder an der entsprechenden Anlagefläche am Magnetteil 7 vorgenommen wird. Sofern das Distanzelement 9 fest am Magnetteil 7 oder lose zwischen dem Magnetteil 7 und der Ankerscheibe 1 angeordnet wird, ergibt sich der Vorteil einer geringer zu bewegenden Masse bei der Ankerscheibe 1.

## Patentansprüche

1. Elektromagnetisch lüftbare Federkraftbremse mit einem mit der abzubremsenden Welle drehfesten, jedoch darauf axial verschiebbaren Bremsrotor, der zwischen einem gestellfesten Widerlager, wie einer Gegendruckscheibe, und einer von zumindest einer Druckfeder in Richtung zum Bremsrotor hin beaufschlagten Ankerscheibe angeordnet ist, die entgegen der Kraft der Druckfeder mit der vom Bremsrotor abliegenden Seite unter dessen Freigabe über einen Lüftweg hinweg zu einem Magnetteil hin anziehbar ist, wobei der Magnetteil beim Anziehen der Ankerscheibe mit einem Übererregerstrom, bei daran anliegender Ankerscheibe mit einem verringerten Haltestrom und bei abgefallener Ankerscheibe sowie teilweisem Bremseinsatz mit einem Erregerstrom beaufschlagt ist, bei dem die Magnetkraft die Federkraft teilweise kompensiert,
dadurch gekennzeichnet
daß zwischen der Ankerscheibe (1) und dem Magnetteil (7) ein nicht magnetisches Distanzelement (9)derart angeordnet ist, daß der Arbeitsbereich der Ankerscheibe (1) in den flacher verlaufenden Bereich der Magnetkraftkennlinien bezogen auf den Lüftweg verlagert ist.

2. Federkraftbremse nach Anspruch 1,
dadurch gekennzeichnet,
daß die Dicke des Distanzelementes (9) danach bestimmt ist, daß bei einer Verringerung des Haltestroms um 5 bis 10 % die Ankerscheibe (1) vom Magnetteil (7) abfällt.

3. Federkraftbremse nach Anspruch 1 oder 2,
dadurch gekennzeichnet,
daß die Ankerscheibe (1) von mehreren Druckfedern (2) beaufschlagt ist, deren Kräfte in Drehrichtung asymmetrich wirken.

4. Federkraftbremse nach Anspruch 3,
dadurch gekennzeichnet,
daß die Druckfedern (2) relativ zur Ankerscheibe (1) nicht drehsymmetrisch angeordnet sind.

5. Federkraftbremse nach Anspruch 3,
dadurch gekennzeichnet,
daß die Druckfedern (2) relativ zur Ankerscheibe (1) drehsymmetrisch sind, jedoch zumindest eine der Druckfedern (2) eine von den anderen abweichende Federcharakteristik hat.

6. Federkraftbremse nach einem der Ansprüche 1 bis 5,
dadurch gekennzeichnet,
daß das Distanzelement (9) eine kreisringförmige Scheibe oder ein Segment einer solchen Scheibe ist.

7. Federkraftbremse nach einem der Ansprüche 1 bis 6,
dadurch gekennzeichnet,
daß das Distanzelement (9) zwischen der Ankerscheibe (1) und dem Magnetteil (7) eine Messingscheibe ist.

8. Federkraftbremse nach einem der Ansprüche 1 bis 7,
dadurch gekennzeichnet,
daß das Distanzelement (9) fest an der Ankerscheibe (1)angeordnet ist.

9. Federkraftbremse nach einem der Ansprüche 1 bis 7,
dadurch gekennzeichnet,
daß das Distanzelement (9) fest am Magnetteil (7) angeordnet ist.

10. Federkraftbremse nach einem der Ansprüche 1 bis 7,
dadurch gekennzeichnet,
daß das Distanzelement (9) lose zwischen der Ankerscheibe (1) und dem Magnetteil (7) angeordnet ist.

## Revendications

1. Frein à ressort à desserrage électromagnétique avec un rotor de freinage ingauchissable avec l'arbre à freiner mais cependant déplaçable axialement sur celui-ci et disposé entre un dispositif de butée, tel qu'un disque de contre-pression, solidaire avec le châssis, et un disque d'armature d'aimant qui est soumis à l'action d'au moins un ressort de pression en direction du rotor de freinage, ce disque d'armature d'aimant étant attiré, à l'inverse de la force de pression du ressort, vers une pièce magnétique, sur un parcours de desserrage, par le côté opposé au rotor de freinage, lors de la libération de celui-ci, la pièce magnétique étant soumise à un courant de surexcitation lors de la sollicitation du disque d'armature d'aimant, à un courant de maintien réduit lors de l'entrée en contact du disque d'armature d'aimant et à un courant d'excitation ainsi qu'une action de freinage partielle lors de la retombée du disque d'armature d'aimant, la force magnétique compensant alors partiellement la force de ressort,
caractérisé en ce que
un élément de distance (9) non magnétique est disposé entre le disque d'armature d'aimant (1) et la pièce magnétique (7) de sorte que la plage d'opération du disque d'armature d'aimant (1) soit transposée dans la plage la plus plane de la courbe caractéristique de la force magnétique, par rapport au parcours de desserrage.

2. Frein à ressort selon la revendication 1,
caractérisé en ce que
l'épaisseur de l'élément de distance(9) est déterminée de sorte que le disque d'armature d'aimant (1) retombe de la pièce magnétique (7) lorsque le courant de maintien est réduit de 5 à 10 %.

3. Frein à ressort selon la revendication 1 ou 2,
caractérisé en ce que
le disque d'armature d'aimant (1) est soumis à l'action de plusieurs ressorts de pression (2) dont les forces agissent asymétriquement dans le sens de rotation.

4. Frein à ressort selon la revendication 3,
caractérisé en ce que
les ressorts de pression (2) ne sont pas disposés en rotation symétrique relativement au disque d'armature d'aimant (1).

5. Frein à ressort selon la revendication 3,
caractérisé en ce que
les ressorts de pression (2) sont en rotation symétrique relativement au disque d'armature d'aimant (1), l'un des ressorts de pression (2), au moins, présentant cependant une caractéristique divergeant de celles des autres.

6. Frein à ressort selon l'une des revendications 1 à 5,
caractérisé en ce que
l'élément de distance(9) présente la forme d'un anneau circulaire ou d'un segment de disque.

7. Frein à ressort selon l'une des revendications 1 à 6,
caractérisé en ce que
l'élément de distance (9), disposé entre le disque d'armature d'aimant (1) et la pièce magnétique (7) est un disque en laiton.

8. Frein à ressort selon l'une des revendications 1 à 7,
caractérisé en ce que
l'élément de distance (9) est fixé au disque d'armature d'aimant (1).

9. Frein à ressort selon l'une des revendications 1 à 7,
caractérisé en ce que
l'élément de distance(9) est fixé à la pièce magnétique (7).

10. Frein à ressort selon l'une des revendications 1 à 7,
caractérisé en ce que
l'élément de distance (9) est disposé librement entre le disque d'armature d'aimant (1) et la pièce magnétique (7).

## Claims

1. Electromagnetically ventilated spring-loaded brake having a brake rotor which is rotationally secured with the shaft which is to be braked but is mounted axially displaceable thereon, wherein the brake rotor is mounted between an abutment, such as a back pressure disc, fixed on the frame and an armature disc which is loaded by at least one compression spring in the direction of the brake rotor and can be attracted towards a magnetic part against the force of the compression spring by the side remote from the brake rotor through its release over an air way, wherein the magnetic part is biased during the attraction of the armature disc with a super exciter current, when the armature disc adjoins same with a reduced holding current and when the armature disc has moved away as well as with a partial brake use, with an exciter current, wherein the magnetic force partially compensates the spring force,
characterised in that a non-magnetic spacer element (9) is mounted between the armature disc (1) and the magnetic part (7) so that the work area of the armature disc (1) is moved into the flatter region of the magnetic force characteristic curve in relation to the air way.

2. Spring-loaded brake according to claim 1 characterised in that the thickness of the spacer element (9) is determined in that with a reduction in the holding current by 5 to 10 % the armature disc (1) drops away from the magnetic part (7).

3. Spring-loaded brake according to claim 1 or 2 characterised in that the armature disc (1) is loaded by several compression springs (2) whose forces act asymmetrically in the direction of the rotation.

4. Spring-loaded brake according to claim 3 characterised in that the compression springs (2) are arranged non-symmetrical relative to the armature disc (1) .

5. Spring-loaded brake according to claim 3 characterised in that the compression springs (2) are arranged rotationally symmetrical relative to the armature disc (1) but at least one of the compression springs (2) has a spring characteristic which differs from the others.

6. Spring-loaded brake according to one of claims 1 to 5 characterised in that the spacer element (9) is a circular ring-shaped disc or a segment of such a disc.

7. Spring-loaded brake according to one of claims 1 to 6 characterised in that the spacer element (9) between the armature disc (1) and the magnetic part (7) is a brass disc.

8. Spring-loaded brake according to one of claims 1 to 7 characterised in that the spacer element (9) is mounted fixed on the armature disc (1).

9. Spring-loaded brake according to one of claims 1 to 7 characterised in that the spacer element (9) is mounted fixed on the magnetic part (7).

10. Spring-loaded brake according to one of claims 1 to 7 characterised in that the spacer element (9) is mounted loose between the armature disc (1) and the magnetic part (7).
